# EUROPÄISCHE PATENTANMELDUNG

(11) **EP 2 830 198 A2**
(43) Veröffentlichungstag der Anmeldung: **28.01.2015**
(21) Anmeldenummer: 14173435.0
(22) Anmeldetag: 23.06.2014
(51) Int. Cl.: H02K 11/00

(54) **Elektrische Maschine**

(30) Priorität: 23.07.2013 DE 102013214385
(71) Anmelder: ZF Friedrichshafen AG, 88038 Friedrichshafen (DE)
(72) Erfinder: Brückner, Christian, 97222 Rimpar (DE); Keller, Stefan, 97526 Sennfeld (DE); Rauch, Matthias, 97447 Frankenwinheim (DE); Zimmer, Manfred, 97475 Zeil (DE)

(57) **Zusammenfassung**

Elektrische Maschine 10 umfassend einen Rotor 9, einen Stator 11 mit Statorzähnen, an denen Isolierkörper 18 angeordnet sind, welche von Statorspulen 20 umwickelt sind. Des Weiteren umfasst die elektrische Maschine 10 neben einem Sensor 26, der an einem Sensorträger 60 angeordnet ist, eine Verschaltungseinrichtung 22 mit Verbindungsleitern, wobei die Verbindungsleiter mit Wicklungsdrahtenden der Statorspulen 20 verschaltet sind. Die elektrische Maschine 10 ist dadurch gekennzeichnet, dass die Position des Sensors 26 an zumindest einer der Statorspulen 20 durch formschlüssige Anordnung des Sensorträgers 60 an mindestens einem Isolierkörper 18 festgelegt ist.

## Beschreibung

Die Erfindung betrifft eine elektrische Maschine gemäß dem Oberbegriff des Patentanspruchs 1.

Eine solche elektrische Maschine wird unter anderem in Kraftfahrzeugen verwendet und ist aus der EP 2 306 622 B1 bekannt. Es ist eine Schaltscheibe beschrieben, an der ein Trägerteil mit einer Rastverbindung befestigt ist, wobei an dem Trägerteil wiederum Tragetaschen federelastisch angeordnet sind, die Temperatursensoren aufnehmen. Diese Tragetaschen sind jeweils zwischen zwei Statorwicklungen angeordnet und kraftschlüssig an einer der Statorwicklungen angelegt. Durch die vielen ineinandergreifenden Bauteile, die fest miteinander verbunden sind, ist eine Montage durch die vielen aufeinanderfolgenden Montageschritte kompliziert und aufwändig. Des Weiteren führen Toleranzen der verschiedenen Bauteile, sowie die federelastische Anbringung der Tragetasche zu einer Streuung der Position des Temperatursensors.

Es stellt sich somit die Aufgabe einen Sensor einer elektrischen Maschine genau und reproduzierbar zu positionieren und zu montieren.

Diese vorstehende Aufgabe wird mittels einer elektrischen Maschine gemäß dem unabhängigen Patentanspruch gelöst. In den abhängigen Ansprüchen sind vorteilhafte Ausgestaltungen und Weiterbildungen der Erfindung angegeben.

Gemäß der Erfindung wird eine gattungsgemäße elektrische Maschine vorgeschlagen bei der die Position des Sensors an zumindest einer der Statorspulen durch formschlüssige Anordnung des Sensorträgers an mindestens einem Isolierkörper festgelegt ist.

Eine entsprechend ausgeführte elektrische Maschine ermöglicht eine einfache Montage, sowie eine genaue und reproduzierbare Positionierung des Sensors. Der Isolierkörper ist das positionsbestimmende Bauteil für die Statorspule, analog dazu ist der Sensorhalter das positionsbestimmende Bauteil für den Sensor. Durch direkte Anordnung der positionsbestimmenden Bauteile aneinander, werden Toleranzen durch weitere zwischengeschaltete Bauteile vermieden. Daher weisen die Isolierkörper mindestens einen Eingriff auf, an dem der Sensorträger angelegt und ausgerichtet ist. Vorteilhafterweise sind mehrere Eingriffe vorhanden, die die Position des Sensorträgers und damit auch des Sensors vorgeben. Der Sensorträger kann an den Eingriffen nur angelegt sein, es besteht jedoch auch die Möglichkeit, dass der Sensorträger an den Eingriffen festgelegt ist, beispielsweise durch Verrastung oder Klemmung. Durch die geringe Anzahl an Bauteilen werden nicht nur Toleranzen minimiert, sondern es ist auch eine einfache Montage gegeben.

Es hat sich als vorteilhaft herausgestellt, wenn der Sensor in einen Zwischenraum zwischen zwei benachbarten Statorspulen eingreift. Dadurch kann der Sensor, insbesondere ein Temperatursensor, gleichzeitig zwei Statorspulen kontaktieren und ein zuverlässiger Betrieb des Sensors ist gegeben.

Es wird eine vorteilhafte Ausführungsvariante vorgeschlagen, bei der der Sensor an dem Sensorträger fixiert ist. Der Sensor kann unter anderem durch eine Rastverbindung, Verschraubung oder durch eine Gummitülle mit Nut, die in ein passendes Gegenstück eingreift, festgelegt sein.

Günstigerweise ist der Sensorträger formschlüssig durch die benachbarten Bauteile festgelegt. Da der Sensorträger bei dieser Ausführungsvariante durch die umliegenden Bauteile in alle Richtungen festgelegt ist, entfällt die Notwendigkeit den Sensorträger zusätzlich zu fixieren. Eine zusätzliche Fixierung kann in bestimmten Fällen, wie weiter unten erläutert, durchaus sinnvoll sein. Zur Anordnung in einem vorgegebenen Bauraum, kann der Sensorhalter an verschiedenen Stellen der Oberfläche Distanzelemente, unter anderem Rippen aufweisen. Diese Distanzelemente dienen als Anschlag für umliegende Bauteile. Ein derartiger Sensorträger mit Distanzelementen, besonders mit Rippen, kann relativ dünn und daher relativ leicht ausgeführt sein.

Es hat sich als äußerst vorteilhaft herausgestellt, den Sensorträger als Einlegeteil auszuführen. Die Montage ist dadurch äußerst einfach und schnell durchzuführen.

Dies bietet sich besonders dann an, wenn der Sensorträger durch die umliegenden Bauteile festgelegt ist.

Bei der Montage ist es besonders günstig, wenn der Sensorträger ein Klemmelement aufweist. Dieses Klemmelement dient der Befestigung des Sensorträgers an Bauteilen der elektrischen Maschine, insbesondere an den Isolierkörpern. Dies ermöglicht eine schnelle Fixierung, die zumindest während der Dauer der Montage gewährleistet ist. Durch das Klemmelement soll unter anderem erreicht werden, dass der Sensorträger nicht von selbst herausfällt, beispielsweise beim Umdrehen der elektrischen Maschine während der Montage. Das Klemmelement kann in montiertem Zustand beispielsweise an einem Isolierkörper oder zwischen zwei Isolierkörper angeordnet sein. Diese Ausgestaltung ist besonders vorteilhaft, wenn der Sensorträger als Einlegeteil ausgeführt ist.

Mit besonderem Vorteil weist der Sensorträger ein Führungselement auf. Dieses Führungselement dient der Führung und / oder der Ausrichtung des Sensors an dem Sensorträger. Es gibt verschiedene Varianten des Führungselements, welches unter anderem als Schwert oder als Führungstrichter ausgebildet sein kann, wobei auch die Kombination mehrerer verschiedener Führungselemente von Vorteil sein kann. Ein Führungstrichter vereinfacht unter anderem die blinde Montage des Sensors. Dies kann hilfreich sein, wenn der Sensor, beispielsweise durch schräges Einschieben, unbeabsichtigt falsch montiert werden kann. Zusätzlich oder alternativ dazu verhindert ein Schwert ein Auswandern des Sensors wenn dieser eingesetzt oder eingeschoben wird. Des Weiteren kann das Schwert gering biegsam ausgeführt sein und als eine Art Feder wirken, die den Sensor kraftschlüssig an einer, an mehreren oder zwischen mehreren Statorspulen anordnet. Das Schwert kann daher eine Führungs- und eine Haltefunktion vereinen. Die verschiedenen Funktionen der Führungselemente können unabhängig voneinander verwendet werden.

In einer vorteilhaften Variante weist der Sensorträger einen Kabelaufnahmeabschnitt zur Aufnahme und / oder zur Abdeckung eines Sensorkabels auf. Dieser Kabelaufnahmeabschnitt ermöglicht eine geführte Positionierung des Sensorkabels. Des Weiteren ist das Kabel durch die Führung vor Beschädigungen geschützt, die unter anderem bei der Montage weiterer Bauteile auftreten können. Neben der Führung des Sensorkabels kann der Kabelaufnahmeabschnitt zur Aufnahme auch lediglich eine Abdeckung des Sensorkabels darstellen.

Bevorzugt ist der Sensorträger gerüstförmig, insbesondere U-, V-, W-, X- oder Y-förmig ausgeführt. Diese Formen ermöglichen eine schlanke und leichte Bauform. Außerdem weisen derartig ausgeführte Sensorträger mindestens drei Anlagepunkte auf, die eine stabile Einbaulage gewährleisten. Diese Formgebungen des Sensorträgers sind von besonderem Vorteil, wenn der Sensorträger als Einlegeteil ausgeführt ist und / oder der Sensorträger lediglich durch die umliegenden Bauteile festgelegt ist. Andere Bauformen sind jedoch ebenfalls denkbar, beispielsweise eine I-förmige Variante mit zwei Anlagepunkten.

Es hat sich als besonders Vorteilhaft herausgestellt, den Sensorträger als Kunststoffteil auszuführen, beispielsweise aus einem Duro- oder Thermoplast-Werkstoff.

In einer günstigen Ausführungsvariante ist der Sensor als Temperatursensor ausgeführt.

In einer Weiterbildung ist der Sensorträger an einem Statorträger angeordnet ist. Der Statorträger stellt neben den Isolierkörpern einen weiteren unabhängigen Abstützpunkt dar.

Die Erfindung wird im Folgenden anhand der beigefügten Figuren beispielhaft erläutert.

Es zeigen:
- Fig. 1: ein Sensorhalter in einem montierten Zustand;
- Fig. 2a - c: verschiedene Varianten des Sensorhalters aus Fig. 1;
- Fig. 3: ein anderer Sensorhalter im montiertem Zustand;
- Fig. 4: der Sensorhalter aus Fig. 3 in montiertem Zustand im Querschnitt;
- Fig. 5: der Sensorhalter aus Fig. 3 und Fig. 4 in Einzelansicht;
- Fig. 6: schematische Darstellung der Funktionsweise eines Schwerts des Sensorhalters aus Fig. 3.

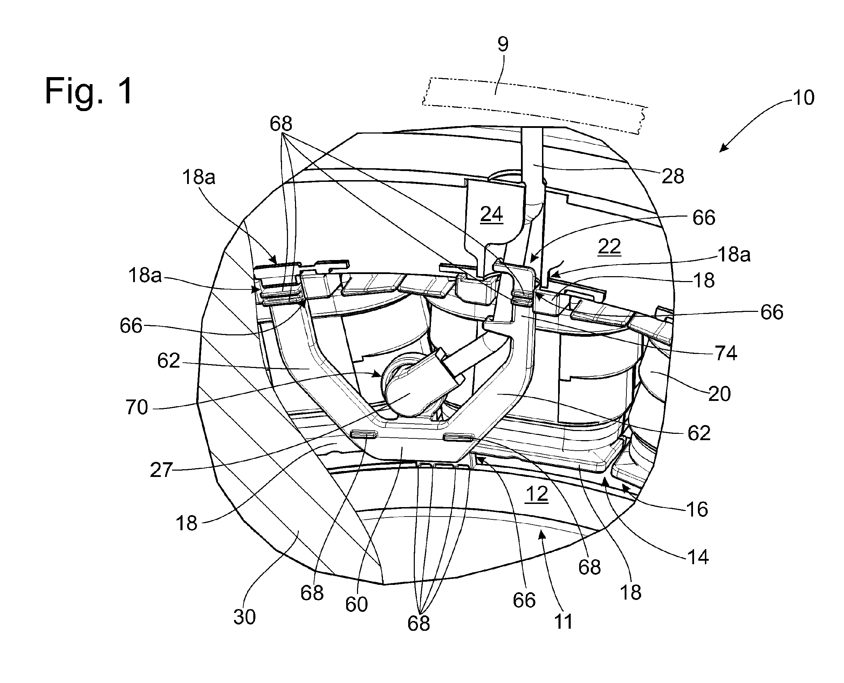

In Fig. 1 ist ein Ausschnitt einer elektrischen Maschine 10 dargestellt. Vorliegend ist die elektrische Maschine in Außenläuferbauart ausgeführt und weist einen Rotor 9 (nur angedeutet) und einen Stator 11, unter anderem mit einem Statorträger 12, einem Statorblechpaket 14 mit einem Jochbereich 16 und Statorzähnen (nicht sichtbar) auf. Der Rotor 9 der elektrischen Maschine 10 ist mit Ausbildung eines Luftspalts radial außerhalb des Stators 11 angeordnet und umgibt diesen. Im Ausführungsbeispiel ist der Rotor 9 hinter einer Verschaltungseinrichtung 22 angeordnet und nur angedeutet, da dieser in der gewählten Perspektive größtenteils verdeckt ist. Die Statorzähne sind außen am Jochbereich 16 gleichmäßig in Umfangsrichtung verteilt. An diesen Statorzähnen ist jeweils ein Isolierkörper 18 angeordnet, der wiederrum von einer Statorspule 20 umwickelt ist. Der Isolierkörper 18 kann, unabhängig von diesem Ausführungsbeispiel, ein- oder mehrteilig ausgeführt sein. Innerhalb der Verschaltungseinrichtung 22 sind Wicklungsdrahtenden der Statorspulen 20 über Ringleiter mit einem Leistungsanschluss verschaltet, wobei die Verschaltung mit einem elektrisch isolierenden Material eingegossen ist (Verschaltung nicht sichtbar). An der Verschaltungseinrichtung 22 ist außerdem ein Kabeldurchführungselement 24 angeordnet.

Die elektrische Maschine weist zusätzlich einen Sensorträger 60 auf, der einen Sensor 26 in einer Sensoraufnahme 70 und ein zum Sensor 26 gehöriges Sensorkabel 28 an einem Kabelaufnahmeabschnitt 74 aufnimmt. Der Sensor 26 ist zwischen den Statorspulen 20 positioniert, wobei in Fig. 1 lediglich eine Umlenktülle 27 des Sensors 26 sichtbar ist. In diesem Fall handelt es sich um einen Temperatursensor 26, welcher in der DE 10 2010 030 968 B4 ausführlicher ausgeführt ist. Das Sensorkabel 28 ist unter anderem innerhalb des Kabeldurchführungselements 24 geführt.

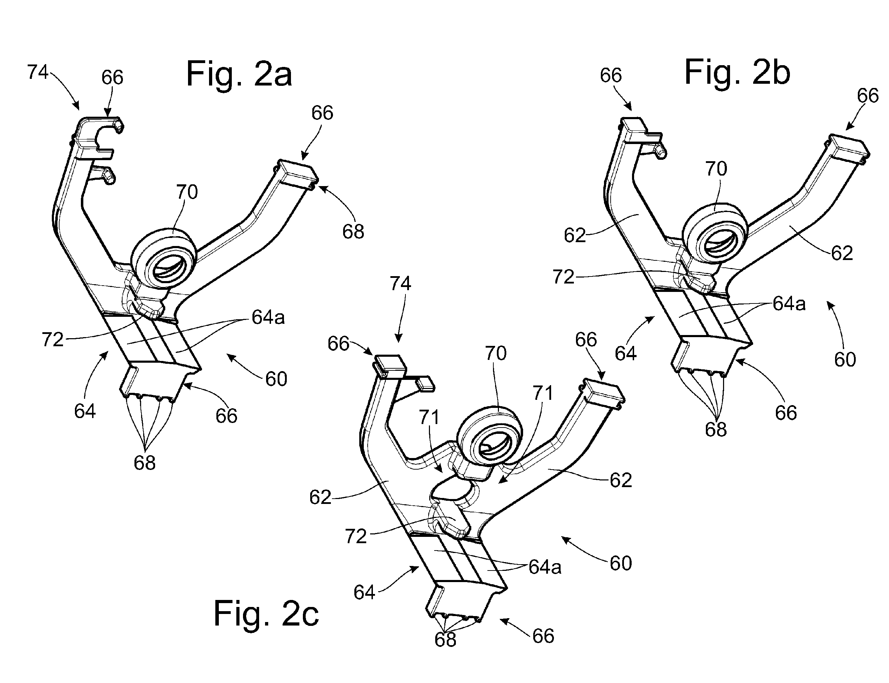

Die in Fig. 1 gezeigte Ausführungsvariante des Sensorträgers 60 ist ebenfalls in Fig. 2a dargestellt. Der Sensorträger 60 weist zwei Arme 62 und einen Steg 64 (in Fig. 1 verdeckt) auf, die Y-förmig angeordnet sind. Weiter weist der Sensorträger 60 Anlageabschnitte 66 auf, wobei die Anlageabschnitte 66 der Arme 62 formschlüssig in Eingriffe 18a der Isolierkörper 18 eingreifen und der Anlageabschnitt 66 des Stegs 64 an dem Isolierkörper 18, dem Jochbereich 16 des Statorblechpakets 14 und dem Statorträger 12 anliegt. Der Sensorträger 60 ist im Wesentlichen durch die formschlüssige Anordnung an den Isolierkörpern 18 ausgerichtet. Des Weiteren weist der Sensorträger 60 an verschiedenen Stellen als Distanzelemente dienende Rippen 68 auf, die unter anderem an einem stirnseitigen Abdeckblech 30 (nur angedeutet) anliegen. Die Rippen 68 an dem Arm 62, der nicht in das Kabeldurchführungselement 24 eingreift, sind teilweise umseitig ausgeführt und sorgen neben einem axialen Anschlag auch für einen Anschlag in Umfangsrichtung, der die umfangsseitige Ausrichtung festlegt. Der Sensorträger 60 ist daher bereits allein durch eine formschlüssige Anordnung an den umliegenden Bauteilen positioniert und in alle Richtungen festgelegt. Ein Formschluss zwischen dem Sensorträger 60 und zumindest einem der umliegenden Bauteile kann beispielsweise auch oder zusätzlich durch eine Rastverbindung erzielt werden.

Eine weitere Möglichkeit den Sensorträger 60, zumindest während der Montage festzulegen, ist in Fig. 2a erkennbar. Dort ist ein Klemmelement 72 dargestellt. In eingelegtem Zustand ist bzw. sind der oder die Isolierkörper 18 klemmend zwischen Steg 64 und Klemmelement 72 angeordnet. Der Sensorträger 60 ist daher bis zur Montage aller restlichen Bauteile an der vorgegebenen Position festgelegt. Dies ist besonders hilfreich, wenn der Sensorträger 60 ohne Fixierung bei einem zwischenliegenden Montageschritt leicht herausfallen könnte. Der Anlageabschnitt 66 des Stegs 64 kann ebenfalls klemmend ausgeführt sein, z.B. klemmend zwischen Statorträger 12 und Isolierkörper 18. Das Klemmelement 72 ist dann besonders sinnvoll, wenn der Sensorträger 60 als Einlegeteil ausgeführt ist.

Der Steg 64 weist, auf der dem Isolierkörper 18 zuweisenden Seite, abgewinkelte Flächen 64a auf. Diese passen den Steg 64 des Sensorträgers 60 an das Formprofil der Isolierkörper 18 an und sorgen für eine formschlüssige Anordnung des Stegs 64 an dem bzw. den Isolierkörper/n 18.

In den Fig. 2a - c sind verschiedene Ausführungsvarianten des Sensorträgers 60 dargestellt, die unterschiedlich ausgebildete Kabelaufnahmeabschnitte 74 aufzeigen. In Fig. 2a ist eine stark ausgeprägte, sehr sichere Kabelführung 74 abgebildet, die das Sensorkabel 28 aufnimmt, führt und abdeckt. Fig. 2b zeigt eine Hilfsführung 74, die hauptsächlich als Klemmschutz dient und das Sensorkabel 28 vor Beschädigungen bei der Montage schützen soll. In Fig. 2c dient der Kabelaufnahmeabschnitt 74 nur noch als Abdeckung 74 des Sensorkabels 28, ohne Führungsfunktion.

Des Weiteren zeigt Fig. 2c eine Möglichkeit die radiale Position der Sensoraufnahme 70 am Sensorträger 60 anzupassen. Dazu sind zwei Sensoraufnahmestege 71 an den Armen 62 angeordnet, die einen radialen Versatz der Sensoraufnahme, verglichen mit Fig. 2a und 2b, bewerkstelligen. Die in gitterartig gehaltenen Sensoraufnahmestege 71 sorgen für eine Gewichts und Materialeinsparung, da keine volle Fläche ausgefüllt wird. Andere Varianten die einen radialen Versatz der Sensoraufnahme 70 ermöglichen, sind ebenfalls denkbar.

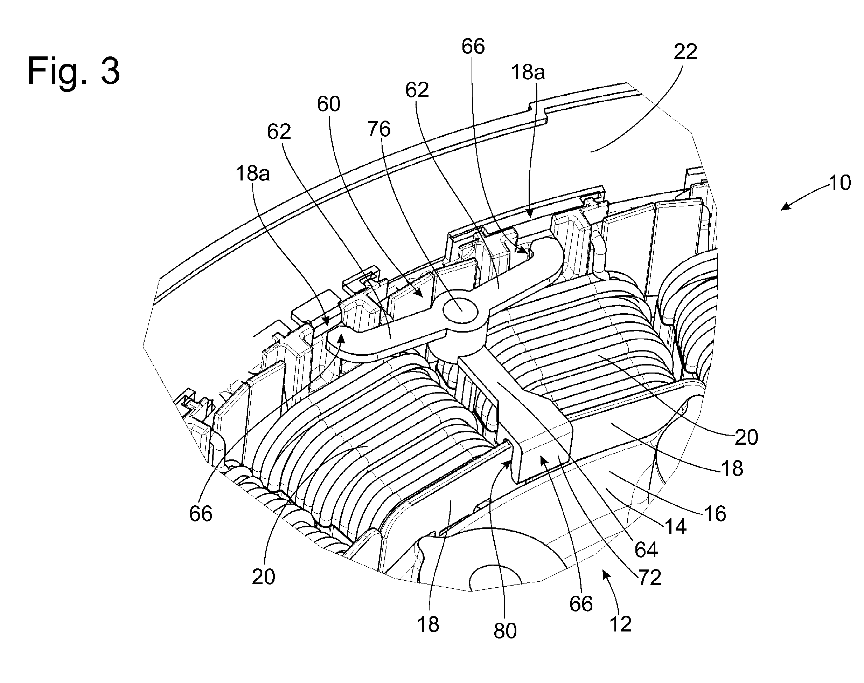

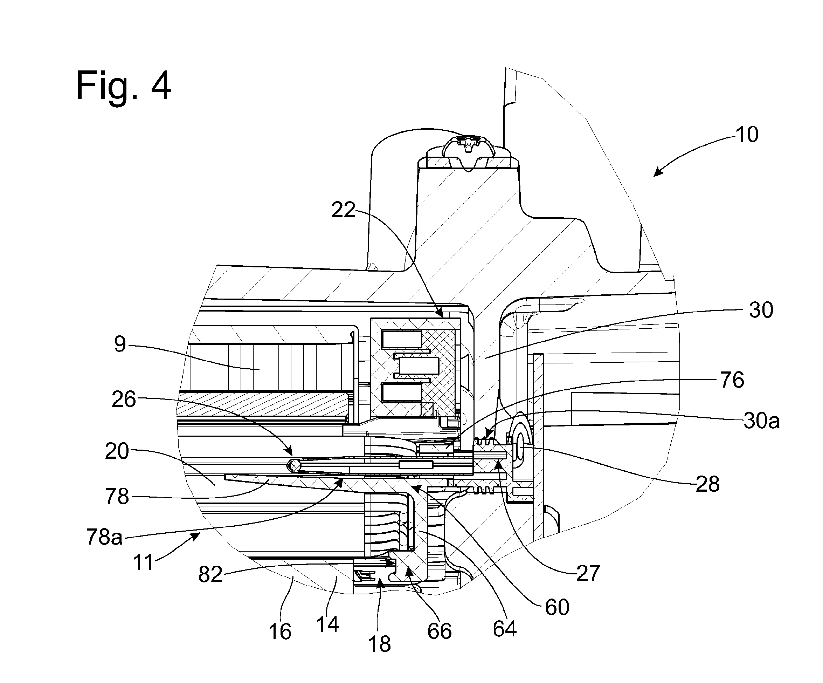

In den Fig. 3 bis 5 ist eine weitere Variante des Sensorträgers 60 dargestellt. Der Grundsätzliche Aufbau der elektrischen Maschine ist der Selbe wie der der oben erläuterten. Im Folgenden werden lediglich die Unterschiede aufgezeigt, wobei für Bauteile und Elemente mit derselben Funktion, dieselben Bezugsziffern verwendet werden.

Der Sensorträger 60 ist, wie auch im ersten Ausführungsbeispiel gemäß Fig. 1 und 2a, durch die umliegenden Bauteile festgelegt. Die Abdeckplatte 30 ist in dieser Ausführungsvariante als Wandung 30 ausgeführt. Außerdem ist die Umlenktülle 27 des Sensors 26 nicht mehr an dem Sensorträger 60 angeordnet, sondern an einer Öffnung 30a der Wandung 30, wobei die Umlenktülle 27 anstelle der Wandung 30 als axialer Anschlag für den Sensorträger 60 dient.

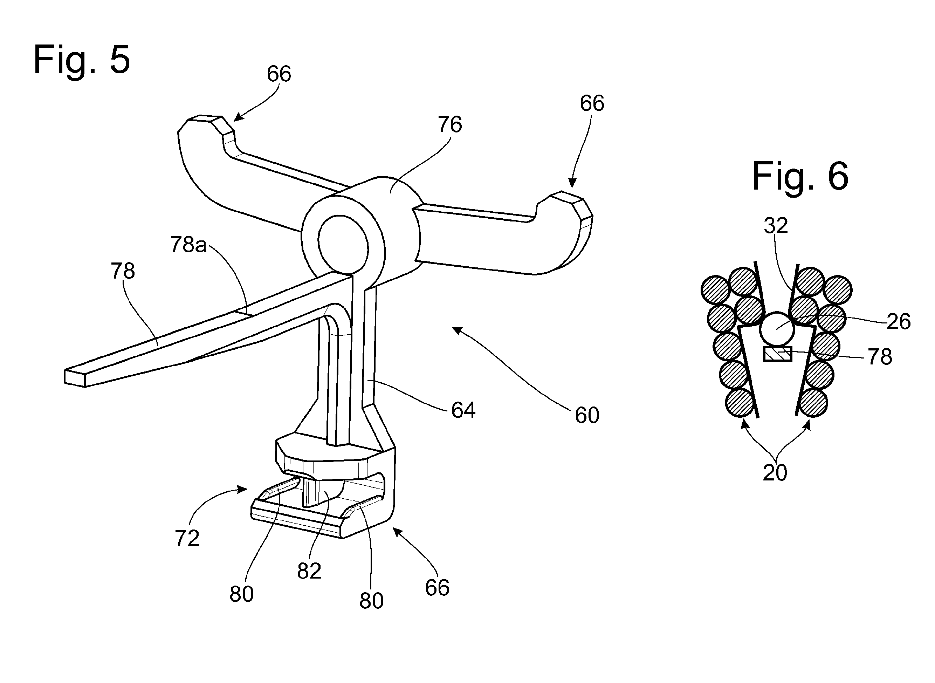

Die Sensoraufnahme 70 aus den Fig. 1 und 2a - 2c wurde hier ersetzt durch ein Führungselement, insbesondere einen Führungstrichter 76. Da der Sensor 26 bei dieser elektrischen Maschine 10 erst nach Montage des Abdeckblechs 30 eingesetzt wird, vereinfacht der Führungstrichter 76 die blinde Montage und unterbindet im Wesentlichen ein schräges Einführen des Sensors 26. Zusätzlich zu dem Führungstrichter 76 weist der Sensorträger 60 als weiteres Führungselement ein Schwert 78 auf. Dieses wirkt beim Einschieben des Sensors 26 führend und verhindert ein Auswandern des Sensors 26. Des Weiteren ist das Schwert 78 derart ausgeführt, dass es den Sensor 26 gegen die Statorspulen 20 drückt. Da der Sensor 26 gegen die Statorspulen 20 gedrückt wird, weist das Schwert 78 neben der Führungsfunktion auch eine Haltefunktion auf. Führungsfunktion und Haltefunktion des Schwerts 78 sind nicht zwingend gekoppelt. Um die Haltefunktion zu optimieren, weist das Schwert 78 einen Knick 78a auf, der in montiertem Zustand zu dem Sensor 26 hinweist und den Sensor gegen die Statorspulen 20 drückt. Um kleine Toleranzen der Sensordicke auszugleichen, ist das Schwert 78 derart ausgebildet, dass es sich unter der Kraft, die der Sensor 26 durch Anlage an den Statorspulen 20 auf das Schwert 78 ausübt, geringförmig verformen und anpassen kann. Die Positionierung des Sensors 26 an den Statorspulen, sowie die Funktionsweise des Schwerts 78 ist schematisch in Fig. 6 dargestellt. Dabei ist der Sensor 26 zwischen dem Schwert 78 und einem Isolationspapier 32, welches die Statorspulen 20 überdeckt, angeordnet.

Da sich der Sensorträger 60 nicht wie bei der ersten Ausführungsvariante an dem Statorträger 12 abstützt, ist anstelle des Anlageabschnitts 66 an dem Steg 64 aus dem ersten Ausführungsbeispiel aus Fig. 1 und 2a - 2c ein stärker ausgeprägtes Klemmelement 72 ausgebildet. Dieses Klemmelement 72 ist U-förmig ausgeführt mit Klemmrippen 80 und einer Mittelwand 82. Die Mittelwand 82 ist teilweise keilartig ausgebildet, wobei diese in montiertem Zustand klemmend zwischen zwei Isolierkörpern 18 angeordnet ist. Die Halterippen des U-förmigen Klemmelements 72 sind ebenfalls derart ausgebildet, dass der Sensorträger 60 an den eingreifenden Isolierkörpern 18 festgeklemmt ist.

Die verschiedenen Halte-, Führungs-, und Klemmelemente sind beliebig kombinierbar und nicht voneinander abhängig.

Die Sensorträger 60 sind vorzugsweise aus einem Duro- oder Thermoplast-Werkstoff ausgeführt.

### Bezugszeichen

- 9: Rotor
- 10: Elektrische Maschine
- 11: Stator
- 12: Statorträger
- 14: Statorblechpaket
- 16: Jochbereich
- 18: Isolierkörper
- 18a: Eingriffe der Isolierkörper 18
- 20: Statorspule
- 22: Verschaltungseinrichtung
- 24: Kabeldurchführungselement
- 26: Sensor / Temperatursensor
- 27: Umlenktülle
- 28: Sensorkabel
- 30: Abdeckblech/Wandung
- 30a: Öffnung
- 32: Isolationspapier
- 60: Sensorträger
- 62: Arm / Arme
- 64: Steg
- 64a: Abgewinkelte Flächen des Stegs 64
- 66: Anlageabschnitt/e
- 68: Rippen
- 70: Sensoraufnahme
- 71: Sensoraufnahmestege
- 72: Klemmelement
- 74: Kabelaufnahmeabschnitt
- 76: Führungstrichter
- 78: Schwert
- 78a: Knick des Schwerts 78
- 80: Klemmrippen
- 82: Mittelwand

## Patentansprüche

1. Elektrische Maschine 10 umfassend
- einen Rotor 9,
- einen Stator 11 mit Statorzähnen,
- an denen Isolierkörper 18 angeordnet sind, welche von Statorspulen 20 umwickelt sind,
- eine Verschaltungseinrichtung 22 mit Verbindungsleitern,
- wobei die Verbindungsleiter mit Wicklungsdrahtenden der Statorspulen 20 verschaltet sind,
- einen Sensor 26, der an einem Sensorträger 60 angeordnet ist,
**dadurch gekennzeichnet, dass** die Position des Sensors 26 an zumindest einer der Statorspulen 20 durch formschlüssige Anordnung des Sensorträgers 60 an mindestens einem Isolierkörper 18 festgelegt ist.

2. Elektrische Maschine 10 nach Anspruch 1, **dadurch gekennzeichnet, dass** der Sensor 26 an dem Sensorträger 60 fixiert ist.

3. Elektrische Maschine 10 nach Anspruch 1 oder 2, **dadurch gekennzeichnet, dass** der Sensorträger 60 formschlüssig durch die benachbarten Bauteile festgelegt ist.

4. Elektrische Maschine 10 nach einem der Ansprüche 1 bis 3, **dadurch gekennzeichnet, dass** der Sensorträger 60 als Einlegeteil ausgeführt ist.

5. Elektrische Maschine 10 nach einem der Ansprüche 1 bis 4, **dadurch gekennzeichnet, dass** der Sensorträger 60 ein Klemmelement 72 zur Befestigung des Sensorträgers 60 an Bauteilen der elektrischen Maschine 10 aufweist, insbesondere den Isolierkörpern 18.

6. Elektrische Maschine 10 nach einem der Ansprüche 1 bis 5, **dadurch gekennzeichnet, dass** der Sensorträger 60 ein Führungselement zur Führung und / oder Ausrichtung des Sensors 26 an dem Sensorträger 60 aufweist.

7. Elektrische Maschine 10 nach einem der Ansprüche 1 bis 6, **dadurch gekennzeichnet, dass** der Sensorträger 60 einen Kabelaufnahmeabschnitt 74 zur Aufnahme und / oder zur Abdeckung eines Sensorkabels 28 aufweist.

8. Elektrische Maschine 10 nach einem der Ansprüche 1 bis 7, **dadurch gekennzeichnet, dass** der Sensorträger 60 gerüstförmig, insbesondere U-, V-, W-, X- oder Y-förmig ausgeführt ist.

9. Elektrische Maschine 10 nach einem der Ansprüche 1 bis 8, **dadurch gekennzeichnet, dass** der Sensorträger 60 als Kunststoffteil ausgeführt ist.

10. Elektrische Maschine 10 nach einem der Ansprüche 1 bis 9, **dadurch gekennzeichnet, dass** der Sensor 26 ein Temperatursensor 26 ist.

11. Elektrische Maschine 10 nach einem der Ansprüche 1 bis 10, **dadurch gekennzeichnet, dass** der Sensorträger 60 an einem Statorträger 12 angeordnet ist.

12. Elektrische Maschine 10 nach einem der Ansprüche 1 bis 11, **dadurch gekennzeichnet, dass** der Sensor 26 in einen, zwischen zwei benachbarten Statorspulen 20 gebildeten, Zwischenraum eingreift.
